Europäisches Patentamt

European Patent Office

Office européen des brevets

(11) Veröffentlichungsnummer: **0 600 360 A1**

# EUROPÄISCHE PATENTANMELDUNG

(21) Anmeldenummer: **93118902.1**

(22) Anmeldetag: **24.11.93**

(51) Int. Cl.⁵: **G02F 1/1335**, G02F 1/1343

(30) Priorität: **30.11.92 DE 4240124**

(43) Veröffentlichungstag der Anmeldung:
**08.06.94 Patentblatt 94/23**

(84) Benannte Vertragsstaaten:
**CH DE FR GB IT LI NL**

(71) Anmelder: **HOECHST AKTIENGESELLSCHAFT**
**Brüningstrasse 50**
**D-65929 Frankfurt am Main(DE)**

(72) Erfinder: **Weippert, Andreas, Dr.-Ing.**
**Alfons-Härtl-Weg 11**
**D-70567 Stuttgart(DE)**
Erfinder: **Lüder, Ernst, Prof. Dr.**
**Kaulbachweg 3A**
**D-70192 Stuttgart(DE)**
Erfinder: **Kallfass, Traugott, Dr.-Ing.**
**Gotenstrasse 7**
**D-71723 Grossbottwar(DE)**
Erfinder: **Rau, Lothar, Dr.-Ing.**

**Mäuerlestrasse 30**
**D-71106 Magstadt(DE)**
Erfinder: **Hochholzer, Volker, Dr.-Ing.**
**Wiener Strasse 11**
**D-70469 Stuttgart(DE)**
Erfinder: **Glück, Joachim, Dr.-Ing.**
**Terrotstrasse 18**
**D-70374 Stuttgart(DE)**
Erfinder: **Minarsch, Jürgen, Dr.-Ing.**
**Stulfenstrasse 15/1**
**D-73061 Ebersbach(DE)**
Erfinder: **Dobler, Markus, Dr.-Ing.**
**Karlsberger Weg 5**
**D-70569 Stuttgart(DE)**
Erfinder: **Rieger, Heinz-Joachim, Dr.**
**Am Kreishaus 2**
**D-65719 Hogheim(DE)**
Erfinder: **Escher, Claus, Dr.**
**Potsdamer Strasse 9**
**D-65719 Hofheim/Ts.(DE)**

(54) **Flüssigkristalldisplay mit hohem Kontrast und hoher Helligkeit.**

(57) Ein Flüssigkristalldisplay, enthaltend zwei Substrate, zwei Elektroden, von denen mindestens eine strukturiert sein muß, mindestens eine Orientierungsschicht und einen Flüssigkristall, dadurch gekennzeichnet, daß die Bereiche der Elektrodenschichten, die über keine Gegenelektrode verfügen, mit einem lichtabsorbierenden, elektrisch leitfähigen Material beschichtet bzw. unterlegt sind. Das erfindungsgemäße Display ist durch einen niedrigen Zuleitungswiderstand gut schaltbar, zeigt durch die Black Matrix einen guten Kontrast und gleichzeitig, wegen der hoher Apertur, gute Helligkeitswerte.

Fig. 2

EP 0 600 360 A1

Rank Xerox (UK) Business Services
(3.10/3.09/3.3.4)

Schalt- und Anzeigevorrichtungen, die Flüssigkristall-Mischungen enthalten (LCDs), sind beispielsweise aus EP-B 0 032 362 (= US-A 4 367 924) bekannt. Flüssigkristalldisplays sind Vorrichtungen, die z. B. aufgrund elektrischer Beschaltung ihre optischen Transmissionseigenschaften derart ändern, daß durchfallendes (und gegebenenfalls wieder reflektiertes) Licht intensitätsmoduliert wird. Beispiele sind die bekannten Uhren- und Taschenrechneranzeigen oder Flüssigkristalldisplays im OA- (office automation) oder TV (television) Bereich (siehe auch Liquid Crystal Device Handbook, Nikkan Kogyo Shimbun, Tokyo, 1989; und darin zitierte Arbeiten).

Hochauflösende Flüssigkristallanzeigen werden i. a. in Form von Matrixanzeigen ausgeführt. Diese enthalten zwei Trägerplatten, von denen mindestens eine transparent ist und die mit einer leitfähigen und zumindest in einem Fall transparenten Schicht derart versehen sind, daß eine Seite horizontale Streifen dieser Schicht aufweist (sog. Zeilenelektroden oder einfach Zeilen) und auf der anderen Seite vertikale Streifen (Spaltenelektroden oder einfach Spalten) vorliegen. Zwischen den beiden Platten befindet sich die Flüssigkristallschicht, die durch eine oder zwei Orientierungsschichten gleichmäßig ausgerichtet ist. Orientierungsschichten sind beispielsweise dünne Polymerschichten, die nach spezieller Oberflächenbehandlung, z. B. Reiben, anisotrop werden und dadurch die Längsachsen der Flüssigkristallmoleküle unidirektional ausrichten. Die Orientierungsschichten können aber auch aus anorganischen Materialien, z. B. $SiO_2$, bestehen, die schon während der Schichtherstellung anisotrop gemacht werden können, z. B. durch eine Schrägaufdampfung. Zusätzlich werden in der Regel noch ein oder zwei Polarisatoren und zur Farbdarstellung noch eine Farbfiltermatrix benötigt. Ferner können Passivierungs-, Antireflex-, Ausgleichs- und sonstige Schichten vorhanden sein.

Bedingt durch den Matrixaufbau entstehen nicht schaltende Zonen zwischen den Zeilen und Spalten. Wenn in diesen Bereichen eine von Null verschiedene Transmission herrscht, führt das zu einer Aufhellung des gesamten Dunkelwertes der Anzeige und dadurch zu einer je nach Lückenbreite empfindlichen Kontrastverschlechterung.

Bei einigen LCDs ist es möglich, den nicht schaltbaren Raum durch entsprechende Orientierung des Flüssigkristalls und der Polarisatoren dunkel zu gestalten; aber auch dabei können Aufhellungen an den Elektrodenrändern auftreten, beispielsweise bedingt durch eine gewisse Fehlorientierung des Flüssigkristalls an den Elektrodenkanten oder wegen der unterschiedlichen Flüssigkristallschichtdicke in diesen Bereichen. In allen anderen LCDs aber werden die nicht schaltbaren Zonen in der Regel durch eine nichttransparente Schicht abgedeckt, wenn man den Kontrast verbessern will. Diese Schicht wird "Black Matrix" genannt. Stand der Technik ist es, die Black Matrix auf eine der Trägerplatten aufzubringen und elektrisch von der darüberliegenden Elektrodenschicht mit Hilfe einer transparenten Isolationsschicht zu isolieren (siehe z. B. H. Rieger et al., SID 91 Digest (1991) 396). Insbesondere ferroelektrische LCDs (FLCDs), die einer Feldbehandlung unterzogen wurden (siehe z. B. Dübal et al., Proc. 6th Intl. Sympf. o. Electrets, Oxford (1988)) und deren im Betrieb nicht schaltbarer Raum daher nicht mehr ganz dunkel zu schalten ist, können mit einer Black Matrix verbessert werden.

Bei zunehmender Auflösung, d. h. Pixelzahl und Displayfläche, einer Matrixanzeige steigt der Zuleitungswiderstand zum Pixel wegen der abnehmenden Bahnbreite und zunehmenden Bahnlänge der Elektrodenschicht. Eine Verbesserung der Leitfähigkeit der i. a. aus ITO (Indiumoxid/Zinnoxid) bestehenden Elektrode durch Vergrößerung der Schichtdicke ist nur bis zu einer gewissen Grenze möglich, da sonst die Transparenz nicht mehr gegeben ist. Für solche Fälle ist es beschrieben, auf die ITO Bahnen möglichst schmale Streifen hochleitfähiger Materialien (z. B. Metalle, wie Cr, Al, Ni, Au, Cu) aufzubringen (siehe z. B. P. W. H. Surguy et al., S. K. Heeks et al., SID 91 Digest (1991) 404). Solche Stoffe sind jedoch nicht transparent und verkleinern dadurch die Apertur.

Diese Maßnahme ist aber gerade bei hochinformativen Anzeigen mit schnellem Bildwechsel von Vorteil, weil sich die Dauer der Umladevorgänge im Bildpunkt so auf das Schaltverhalten auswirken kann, daß kein Schaltvorgang mehr stattfindet. Für einen Bildpunkt eines Matrixdisplays wird die Umladezeit im wesentlichen von der Bildpunktkapazität und den Bildpunkt-Zuleitungen in Form von RC-Leitungen bestimmt. Die RC-Zuleitungen werden dabei näherungsweise durch die Kapazitäten der Bildpunkte, die mit den Zuleitungselektroden gebildet werden, und den Widerstandswert pro Bildpunkt in den Zuleitungen beschrieben. Da die Bildpunktkapazitäten i. a. durch die Vorgaben von Displaygröße, Displayauflösung und Flüssigkristallmaterial festgelegt sind, können die Umladevorgänge beispielsweise durch Reduzierung des Leiterbahnwiderstands beschleunigt werden.

Wünschenswert ist es, den Zuleitungswiderstand zum Pixel zu erniedrigen, ohne die Apertur des LCDs weiter zu verringern.

Dies wird durch eine elektrisch leitfähige Struktur erreicht, die gleichzeitig sowohl den Zuleitungswiderstand zum Pixel verringert als auch die nicht schaltbaren Zonen in einem Display abdeckt, d. h. als Black Matrix dient. Dazu werden alle Bereiche der transparenten Elektrodenschicht, die nicht optisch aktiv wirksam werden, weil ihnen die Gegenelektrode fehlt, mit einem lichtabsorbierenden elektrisch leitfähigen Material beschichtet bzw. unterlegt.

Gegenstand der Erfindung ist ein Flüssigkristalldisplay, enthaltend zwei Substrate, zwei Elektroden, von denen mindestens eine strukturiert sein muß, mindestens eine Orientierungsschicht und einen Flüssigkristall, dadurch gekennzeichnet, daß die Bereiche der beiden Elektrodenschichten, die über keine Gegenelektrode verfügen mit einem lichtabsorbierenden, elektrisch leitfähigen Material beschichtet bzw. unterlegt sind.

Vorteilhaft werden diese beschichteten Bereiche durch mindestens einen Streifen aus einem elektrisch leitfähigen Material, der längs der Leiterbahnen der strukturierten Elektroden angebracht ist, verbunden. Dies bewirkt, daß der elektrische Widerstand signifikant erniedrigt wird.

Das erfindungsgemäße Display ist durch einen niedrigen Zuleitungswiderstand gut schaltbar, zeigt durch die Black Matrix einen guten Kontrast und gleichzeitig, wegen der hohen Apertur, gute Helligkeitswerte.

Im Gegensatz zum Stand der Technik ist für die Metallisierung der Elektroden in Form der Black Matrix nur eine zusätzliche Beschichtung mit Strukturierung notwendig. Wenn eine Metallisierung der Außenkontakte gefordert wird, um z. B. das Justieren von Streifenleitern zu verbessern oder den Übergangswiderstand zu verringern, kann diese zusammen mit der Black Matrix erzeugt werden. In diesem Fall ist daher sogar keine zusätzliche Schicht erforderlich. Der Leiterbahnwiderstand wird bei gleicher Bahnbreite gegenüber den bekannten Lösungen durch die Querstege noch stärker gesenkt. Dadurch kann bei gefordertem maximalen Leiterbahnwiderstand entweder die Elektroden-Schicht noch dünner gemacht werden oder aber die Bahnbreite der Metallisierung verkleinert werden. Beides führt zu einer größeren Helltransmission des Pixels - Ersteres wegen geringerer Absorption der Elektroden-Schicht und Letzteres wegen der größeren Apertur.

Bei Aufbringen der erfindungsgemäßen Metallisierungsschicht wird der Widerstand der Leiterbahnen in guter Nährung ausschließlich durch den spezifischen Widerstand der Metallisierung bestimmt. Dieser beträgt i. a. weniger als 5 % vom spezifischen Widerstand der Elektroden-Schicht.

Als erfindungsgemäße Schicht zur Erhöhung der Leitfähigkeit bei gleichzeitiger Black-Matrix-Wirkung werden lichtabsorbierende, elektrisch leitfähige Materialien eingesetzt. Vorzugsweise geeignete Materialien sind solche, die einen spezifischen Widerstand von $< 15 \ \mu\Omega$ cm besitzen. Beispiele für solche Stoffe sind alle Arten von Metallen und Metallegierungen und leitfähige organische Polymere.

Bevorzugt ist die Verwendung von Metallen, wie Chrom, Gold, Aluminium, Kupfer und Nickel. In einer bevorzugten Variante wird die erfindungsgemäße Metallisierungsschicht aus zwei oder mehr Metallschichten aufgebaut, beispielsweise aus Chrom/Gold, Chrom/Aluminium oder Nickel/Gold. Dabei kann die untere Schicht als eine Haftschicht dienen. Im folgenden wird vereinfachend von erfindungsgemäßen Metallisierungsschichten gesprochen, wobei aus dem Obengesagten hervorgeht, daß die erfindungsgemäße Schicht auch aus anderen leitfähigen Materialien bestehen kann.

Die Dicke der erfindungsgemäßen Metallisierungsschicht beträgt vorzugsweise zwischen 20 nm und 400 nm, besonders bevorzugt zwischen 50 und 250 nm, insbesondere zwischen 150 und 200 nm. Besteht sie aus einer Abfolge von zwei Schichten beträgt das Verhältnis von der unteren Haftschicht zur oberen vorzugsweise 1 bis 0,1 besonders bevorzugt 0,4 bis 0,2.

Die Breite der Stege quer zu den Elektroden-Leiterbahnen ist durch den Abstand der parallel zueinander verlaufenden Elektroden-Leiterbahnen bestimmt. Um die Black-Matrix-Wirkung voll zu entfalten ist, sie vorzugsweise nicht geringer als der Abstand paralleler Elektroden-Leiterbahnen auf dem der erfindungsgemäßen Metallisierungsschicht gegenüberliegenden Substrat. Vorzugsweise ist die Breite der Stege um einen Überlappwert, der bevorzugt 2 bis 20 $\mu$m, besonders bevorzugt 4 bis 10 $\mu$m beträgt, größer als der Abstand der gegenüberliegenden Elektroden-Leiterbahnen.

Die erfindungsgemäße Metallisierungsschicht besteht vorzugsweise neben Stegen quer zur Elektroden-Leiterbahn auch aus damit verbundenen Streifen längs dieser Leiterbahn. Dabei ist es selbstverständlich, daß die Längsstreifen zweier paralleler Elektroden-Leiterbahnen sich nicht berühren dürfen. Die Breite der Metallisierungsstreifen längs der Elektroden-Leiterbahnen ist abhängig von Display-Design und beträgt beispielsweise 1 bis 30 % der Elektroden-Leiterbahnbreite.

Das Auftragen der erfindungsgemäßen Metallisierungsschicht erfolgt nach Standardmethoden, wie Aufdampfen und Aufstäuben, wie sie beispielsweise in R. W. Berry, P. M. Hall, M. T. Harris, Thin Film Technology, Van Nostrand Reinhold Company, New York 1968; E. Lüder, Bau hybrider Mikroschaltungen, S. 64 ff., S. 75 ff., Springer Verlag, Berlin 1977, H. Frey, G. Kiesel, Dünnschichttechnologie, S. 16 ff., S. 100 ff., VDI Verlag Düsseldorf 1987; L. Vossen, W. Kern, Thin Film Processes, S. 12 ff., Academic Press, New York 1978, und L. I. Maissel, R. Glancy, Handbook of Thin Film Technology, McGraw Hill, New York 1970 beschrieben sind.

Zur Herstellung der erfindungsgemäßen Metallisierungsschicht ist es möglich, zuerst die Elektroden-Leiterbahnen oder aber auch zuerst die Metallisierungsschichten aufzutragen.

Die Figuren zeigen eine bevorzugte Ausführungsform der erfindungsgemäßen Metallisierungsschicht, ohne die Erfindung auf diese beschränken zu wollen.

Figur 1a     zeigt eine erfindungsgemäße metallisierte Leiterbahn, Figur 1b eine erfindungsgemäße Black-Matrix 2 mit den optisch aktiven Bereichen 4 in der Aufsicht. Man erkennt, daß die erfindungsgemäßen Metallisierungsstreifen 1 aus Stegen quer und Streifen längs der Elektroden-Leiterbahnen besteht.

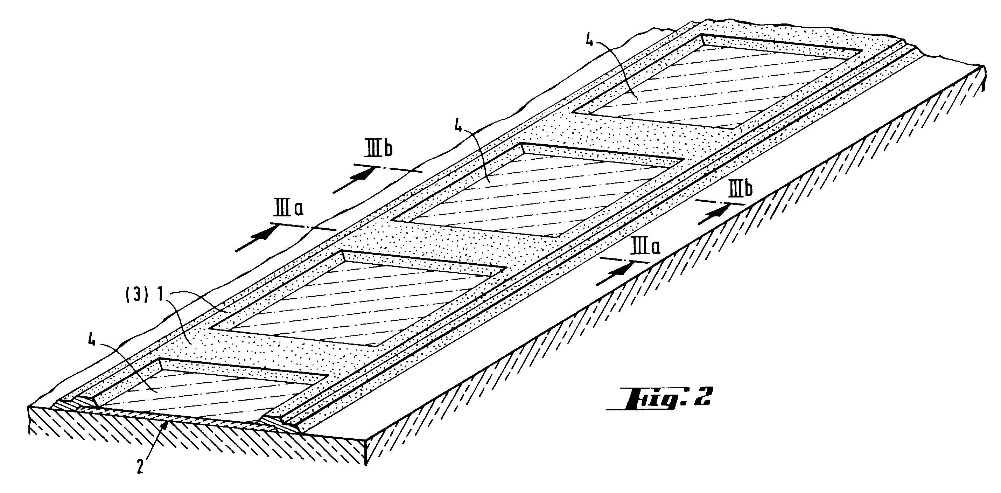

Figur 2     stellt in perspektivische Ansicht eine metallisierte Leiterbahn mit Elektroden-Leiterbahnen 2 und Metallisierungsstreifen 1 dar.

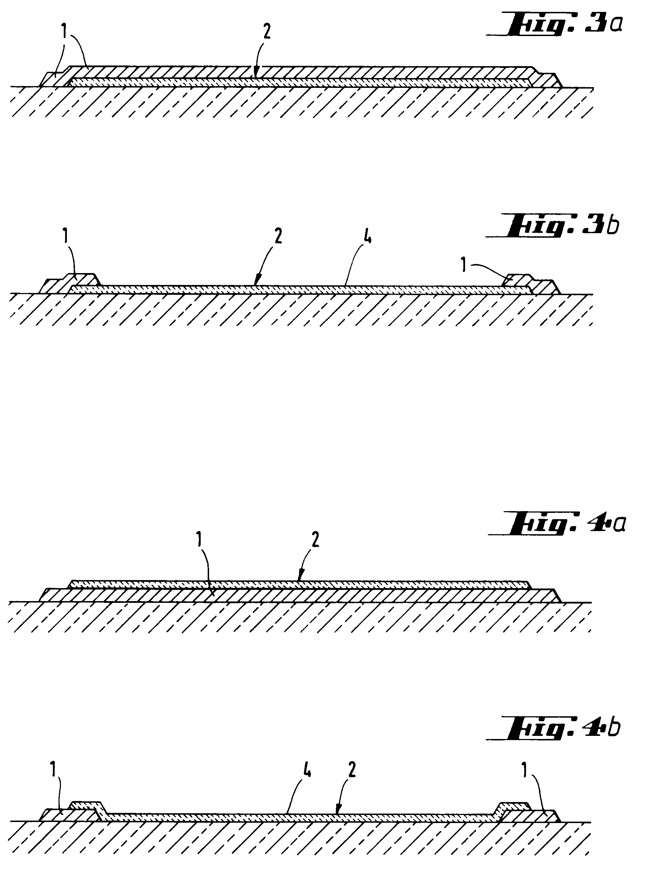

Figur 3a     zeigt den Querschnitt durch eine Leiterbahn mit der Schichtenfolge Elektroden-Leiterbahn 2/Metallisierungsstreifen 1

Figur 3b     durch eine mit der Schichtenfolge Metallisierungsstreifen 1/Elektroden-Leiterbahn 2.

In einer weiteren, bevorzugten Ausführungsform der Erfindung sind die Metallisierungsstreifen längs der Elektroden-Leiterbahnen nur auf jeweils einer Seite der Elektroden-Leiterbahn angebracht, was in der Praxis zu annähernd gleicher Erniedrigung des Leiterbahn-Widerstandes führt. Weiterhin ist es möglich, wenn auf eine starke Erniedrigung des Leiterbahnwiderstandes kein so großer Wert gelegt wird, ausschließlich Stege als Metallisierungsschicht anzubringen. Die Black-Matrix-Wirkung bleibt dabei in vollem Umfang erhalten.

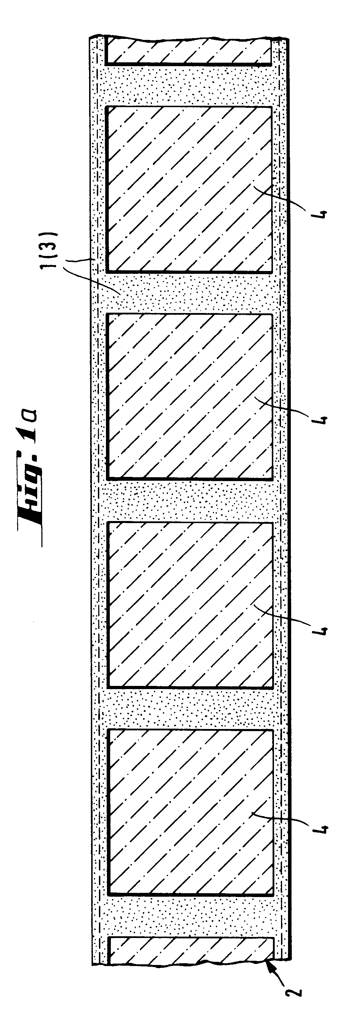

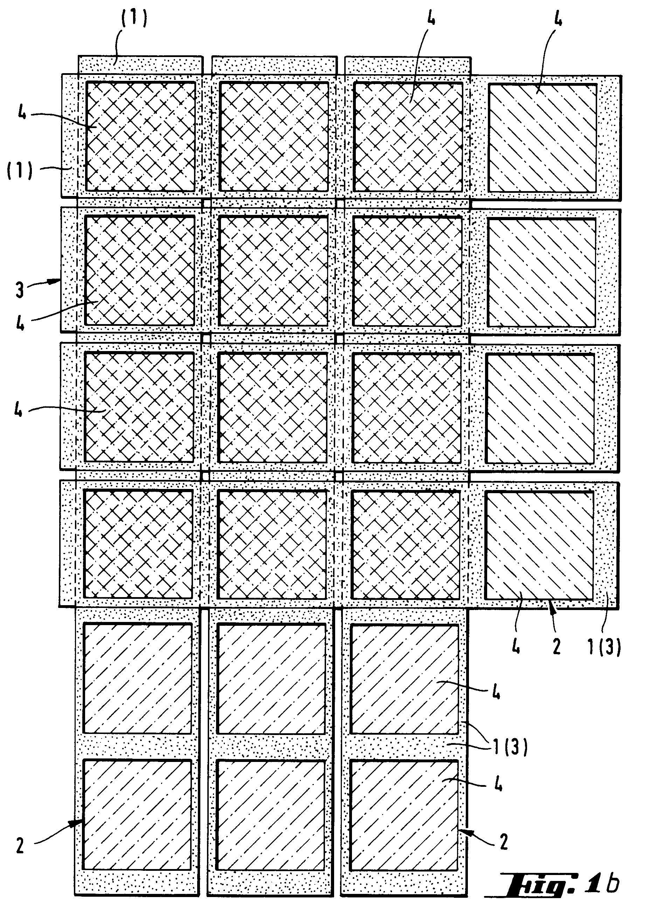

Wie aus Figur 1b hervorgeht, enthält die erfindungsgemäße Black-Matrix zwischen den Kreuzungspunkten der Leiterbahnen kleine nicht abgedeckte Bereiche.

Obwohl dies für den praktischen Betrieb ohne Konsequenzen ist, können die nicht abgedeckten Bereiche z. B. durch das Aufbringen von Spacern an den entsprechenden Punkten beseitigt werden. Durch solche oder vergleichbare Maßnahmen ist leicht eine vollständige Abdeckung der nicht schaltenden Flächen zu erreichen.

Eine oder beide Elektroden sind transparent. Die transparenten Elektroden bestehen bevorzugt aus Indiumoxid oder Zinnoxid, besonders bevorzugt aus ITO. Die nichttransparenten Elektroden bestehen aus Metallen oder Metallegierungen.

Das erfindungsgemäße Flüssigkristalldisplay kann in optoelektronischen Geräten aller Art, beispielsweise in Computermonitoren und Fernsehern, Anwendung finden.

Beispiel

Auf einem gläsernen Grundsubstrat wird eine 45 nm dicke ITO-Schicht in einer Breite von 280 $\mu$m und einer Länge von 40 mm aufgebracht. Längs der ITO-Leiterbahn werden auf beiden Seiten 100 nm dicke und 10 $\mu$m breite (wobei die Überlappung mit der ITO-Schicht jeweils 5 $\mu$m beträgt) Goldstreifen angebracht, die im Abstand von 270 $\mu$m durch 30 $\mu$m breite Querstege aus Gold verbunden sind. An dieser Zeilenleiterbahn wird folgender Widerstand gemessen:

$$R_{ITO + Au} = 0,75 \text{ k}\Omega$$

Nach Wegätzen der Goldschicht beträgt der Widerstand

$$R_{ITO} = 10,5 \text{ k}\Omega$$

Der Widerstand der Leiterbahn wird durch die erfindungsgemäße Metallisierungsschicht um den Faktor 14 erniedrigt.

**Patentansprüche**

1.  Flüssigkristalldisplay, enthaltend zwei Substrate, zwei Elektroden, von denen mindestens eine strukturiert sein muß, mindestens eine Orientierungsschicht und einen Flüssigkristall, dadurch gekennzeichnet, daß die Bereiche der Elektrodenschichten, die über keine Gegenelektrode verfügen, mit einem lichtabsorbierenden, elektrisch leitfähigen Material beschichtet bzw. unterlegt sind.

2.  Flüssigkristalldisplay nach Anspruch 1, dadurch gekennzeichnet, daß die mit dem lichtabsobierenden, elektrisch leitfähigen Material beschichteten Bereiche durch mindestens einen Streifen aus einem elektrisch leitfähigen Material, längs der Leiterbahnen der strukturierten Elektroden angebracht, verbunden werden.

**Fig. 1a**

1(3)

2

4    4    4    4

EP 0 600 360 A1

*Fig. 1b*

Fig. 2

Fig. 3a

Fig. 3b

Fig. 4a

Fig. 4b

| | Europäisches Patentamt | **EUROPÄISCHER RECHERCHENBERICHT** | Nummer der Anmeldung<br>EP 93 11 8902 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | EP-A-0 385 419 (SHARP KK )<br>* das ganze Dokument *<br>--- | 1,2 | G02F1/1335<br>G02F1/1343 |
| X | EP-A-0 475 747 (SHARP KK)<br>* Spalte 3, Zeile 21 - Spalte 5, Zeile 8 *<br>* Spalte 7, Zeile 9 - Zeile 43 *<br>* Spalte 8, Zeile 4 - Spalte 9, Zeile 7 *<br>* Spalte 9, Zeile 47 - Zeile 58 *<br>* Ansprüche 1-5; Abbildungen 1,6 *<br>----- | 1,2 | |

| | | | RECHERCHIERTE SACHGEBIETE (Int.Cl.5) |
|---|---|---|---|
| | | | G02F |

Der vorliegende Recherchenbericht wurde für alle Patentansprüche erstellt

| Recherchenort | Abschlußdatum der Recherche | Prüfer |
|---|---|---|
| DEN HAAG | 9. März 1994 | IASEVOLI, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..................................................................
& : Mitglied der gleichen Patentfamilie, übereinstimmendes Dokument

EPO FORM 1503 03.82 (P04C03)